# EUROPÄISCHE PATENTSCHRIFT

(11) **EP 0 593 983 B1**
(45) Veröffentlichungstag und Bekanntmachung des Hinweises auf die Patenterteilung: **22.01.1997**
(21) Anmeldenummer: 93116219.2
(22) Anmeldetag: 07.10.1993
(51) Int. Cl.: B60D 1/52

(54) **Anhängekupplung**
Trailer coupling
Attelage de remorque

(30) Priorität: 23.10.1992 DE 4235843
(43) Veröffentlichungstag der Anmeldung: 27.04.1994
(73) Patentinhaber: MVG METALLVERARBEITUNGSGESELLSCHAFT mbH, D-52249 Eschweiler (DE)
(72) Erfinder: Horst, Hans-Dieter, Prof. Dr.-Ing., D-52249 Eschweiler (DE)
(74) Vertreter: Bauer, Hubert, Dipl.-Ing.

(56) Entgegenhaltungen:
- EP-A- 0 491 241
- DE-A- 3 000 824
- DE-A- 3 223 719
- US-A- 2 685 457
- US-A- 2 877 025

## Beschreibung

Die Erfindung betrifft eine Anhängekupplung mit einem Gehäuse, das an einem Querträger angeschlossen ist, und einer durch eine konzentrische Öffnung in das Gehäuse einsteckbaren Kugelstange, die in einer koaxialen Position zum Gehäuse verriegelbar ist.

Bei derartigen, allgemein bekannten Anhängekupplungen läßt sich die im Gebrauchszustand in der Regel über die hintere Stoßstange eines Zugfahrzeuges vorstehende Kugelstange aus dem Gehäuse entnehmen, dadurch von der übrigen Kupplung trennen und anderweitig aufbewahren. Diese Möglichkeit bietet den Vorteil, ein Zugfahrzeug mit einer Anhängekupplung auszurüsten, ohne dadurch dessen Gesamtlänge dauerhaft um den überragenden Teil der Kupplungsstange zu vergrößern, was bei der übrigen Benutzung des Fahrzeuges außerordentlich hinderlich sein kann. Der Einsatz der Kupplungsstange läßt sich statt dessen zeitlich auf die Beanspruchungsdauer eines Fahrzeuges als Zugfahrzeug begrenzen.

Aus der DE 30 00 824 A1 ist bereits eine Anhängekupplung der eingangs beschriebenen Art bekannt. Zur lösbaren Verriegelung der Kugelstange sind im Gehäuse Haltenuten für von der Kugelstange seitlich auskragende Zapfen vorgesehen. Weiterhin ist an der Kugelstange eine Exzenterspanneinrichtung angeordnet. Durch diese kann ein in der Kugelstange längsverschiebbar gelagerter Stößel so gegen einen Teil des Gehäuses gedrückt werden, daß die Zapfen der Kugelstange in den Haltenuten verriegelt sind. Weiterhin umfaßt die Exzenterspanneinrichtung einen in der Kugelstange gelagerten und in einer Verriegelungsstellung arretierbaren Exzenter, der mittels eines Spannhebels betätigbar und mit einer in der Kugelstange gelagerten Welle verdrehsicher verbindbar ist.

Als Nachteil dieser bekannten Kupplungsbauart wird angesehen, daß der an der Kugelstange angeordnete Bedienhebel die Möglichkeit des mißbräuchlichen Eingriffes durch Unbefugte bietet und der Benutzer deshalb vor Antritt jeder Fahrt den ordnungsgemäßen Sitz der Kugelstange überprüfen muß.

Um eine Anhängekupplung der oben beschriebenen Bauart zu erhalten, deren Kugelstange jedoch in ihrer Einbaustellung nicht ohne weiteres durch Unbefugte entriegelt werden kann, wird in der DE 32 23 719 C2 vorgeschlagen, auf ein als Formzapfen ausgebildetes Ende der Welle, mit welcher der Exzenter verdrehsicher verbunden ist, eine Klaue eines separaten Spannhebels derart aufzustecken, daß über den Betätigungshebel des Exzenters eine drehfeste Verbindung des Spannhebels mit dem Exzenter hergestellt wird. Dabei ist am Kugelhals eine der radialen Parallelführung einer am Spannhebel angeordneten Lasche dienende Kulisse vorgesehen. Die beim Aufstecken der Klaue auf den Formzapfen notwendige Zustellbewegung erfolgt dabei gegen die Vorspannung einer Druckfeder.

Diese bekannte Anhängekupplung ist aufgrund ihrer Zusammensetzung aus zahlreichen, eine genaue Bearbeitung erfordernden Einzelbauteilen verhältnismäßig aufwendig.

Der Erfindung liegt die Aufgabe zugrunde, eine in einfacher Weise unbefugten Eingriffen entziehbare Anhängekupplung vorzuschlagen, die aus einer geringen Anzahl von Einzelbauteilen herstellbar ist, welche zudem nur teil- bzw. bereichsweise in engen Maßtoleranzen zu fertigen sind, um daraus eine allen Sicherheitsanforderungen entsprechende und einfach zu handhabende Anhängekupplung zusammenzusetzen.

Zur Lösung dieser Aufgabe wird von einer Anhängekupplung der im Oberbegriff des Anspruchs 1 genannten Art ausgegangen, welche erfindungsgemäß die in seinem kennzeichnenden Teil angegebenen Merkmale aufweist.

Durch die erfindungsgemäße Ausbildung der Anhängekupplung kann die Anzahl der Bauteile im wesentlichen beschränkt werden auf:
- das an einen Querträger anzuschließende Gehäuse, das allenfalls über Teilstrecken seines Innenraumes eine maßgenaue Bearbeitung erfordert;
- die in das Gehäuse einzuführende Kugelstange, die gleichfalls nur über Teilstrecken ihres Außenumfanges einer Bearbeitung bedarf;
- das mit dem Gehäuse oder mit der Kugelstange unlösbar zu verbindende Verriegelungselement;
- die auf der Kugelstange verschiebbar gelagerte Hülse, die in ihrer den Bereich des Ringraumes zwischen dem Gehäuse und der Kugelstange ausfüllenden Verriegelungsposition durch einfache, unbefugte, nicht ohne weiteres zugängliche Mittel blockierbar ist.

Zur erleichterten Einführung der Kugelstange in das Gehäuse und zur Stabilisierung der ordnungsgemäßen Kugelstangenposition innerhalb des Gehäuses sieht eine Ausgestaltung der Erfindung vor, daß der Durchmesser der Kugelstange am in das Gehäuse eingeführten Ende dem entsprechenden Innendurchmesser des Gehäuses entspricht, wobei das Ende der Kugelstange mit einem im Querschnitt kreisförmig abgerundeten Hals versehen ist.

Für das die Kugelstange kraftschlüssig im Gehäuse festhaltende Verriegelungselement können verschiedene Ausführungsformen von Fall zu Fall vorteilhaft sein:
Das Verriegelungselement kann aus einem in das Gehäuse oder in die Kugelstange radial eingesetzten Zapfen und die Aussparung aus einer in die Kugelstange bzw. in das Gehäuse eingeformten, winkelförmig verlaufenden Nut bestehen, in die der Zapfen bajonettverschlußartig einführbar ist.

Das Verriegelungselement kann aber auch aus einem in das Gehäuse oder in die Kugelstange eingelassenen Querbolzen und die Aussparung aus einer in die Kugelstange bzw. in das Gehäuse eingeformten, querverlaufenden Rille bestehen, in die der Querbolzen einführbar ist.

Nach einer weiteren Ausgestaltung der Erfindung ist die Hülse durch eine darin integrierte Druckfeder in den Ringraum hinein- und gegen die Spannkraft der Druckfeder aus dem Ringraum herauspreßbar.

Durch diese Ausgestaltung läßt sich sicherstellen, daß die Hülse die Kugelstange in einer zentrierten Position innerhalb des Gehäuses hält, wodurch die kraftschlüssige Verbindung der Kugelstange mit dem Gehäuse gewährleistet bleibt.

Damit selbst bei einem Bruch der in die Hülse integrierten Feder oder einem andersartigen Funktionsdefekt der Feder dennoch die Hülse sicher im Ringraum zwischen der Kugelstange und dem Gehäuse festgehalten bleibt, kann nach einer weiteren Ausgestaltung der Erfindung die Hülse mit einer radialen Bohrung versehen sein, durch die ein federbelasteter Fixierstift hindurchführbar ist, der in der Verriegelungsposition der Hülse in eine der Kugelstange zugeordnete Vertiefung einrastet.

Die erfindungsgemäße Anhängekupplung läßt sich vor einem unbefugten Entriegelungseingriff in ebenso wirkungsvoller wie einfacher Weise dadurch schützen, daß gemäß einer besonders vorteilhaften Ausgestaltung der Erfindung die für den einrastbaren Fixierstift in der Kugelstange ohnehin erforderliche Vertiefung als Ringnut ausgebildet ist, in welche vorzugsweise auf der dem federbelasteten Fixierstift gegenüberliegenden Seite der Riegel eines Sperrschlosses einführbar ist.

In der Zeichnung sind zwei Ausführungsbeispiele einer erfindungsgemäßen Anhängekupplung dargestellt. Es zeigt:
- Fig. 1: einen Längsschnitt durch ein Gehäuse mit einer im spitzen Winkel zu dessen Mittelachse eingeführten, abgebrochen dargestellten Kugelstange;
- Fig. 2: einen Längsschnitt durch ein Gehäuse gemäß Fig. 1, jedoch mit einer koaxial zu dessen Mittelachse ausgerichteten, abgebrochen dargestellten Kugelstange;
- Fig. 3: einen Längsschnitt durch eine auf einer nur teilweise dargestellten Kugelstange verschiebbar gelagerten Hülse;
- Fig. 4: einen Querschnitt durch die Hülse nach der Linie IV-IV der Fig. 3.
- Fig. 5: einen Längsschnitt durch ein Gehäuse mit einer gemäß Fig. 2 ausgerichteten Kugelstange in einer abgewandelten Ausführungsform.

Die Anhängekupplung weist ein Gehäuse 1 auf, das an einem nicht dargestellten Querträger befestigt ist, der seinerseits in konventioneller Weise an ein Zugfahrzeug montierbar ist.

In das Gehäuse 1 ist eine Kugelstange 2 mit einem der Kugel abgewandten Endstück einschiebbar. Obschon der Außendurchmesser der Kugelstange 2 bis auf ihr abgerundetes, tief im Innern des Gehäuses 1 sitzendes Ende 3 kleinere Außendurchmesser aufweist als die entsprechenden Durchmesser des Gehäuses 1 und folglich insoweit erhebliches Spiel zwischen dem Gehäuse 1 und der Kugelstange 2 herrscht, läßt sich die Kugelstange 2 aufgrund eines darin eingesetzten, radial vorstehenden Zapfens 4 nur in einem zur Gehäusemittelachse spitzen Winkel einführen. Nur in dieser bestimmten Winkelstellung kann der Zapfen 4 durch eine Nut 5 im Gehäuse 1 gleiten. Diese verläuft von ihrer durch den Rand des Gehäuses 1 definierten Eintrittsöffnung an zunächst in axialer Richtung des Gehäuses 1, wobei diese Strecke der Nut 5 mit ihrer Mittellinie versetzt zur Mittelachse des Gehäuses 1 verläuft.

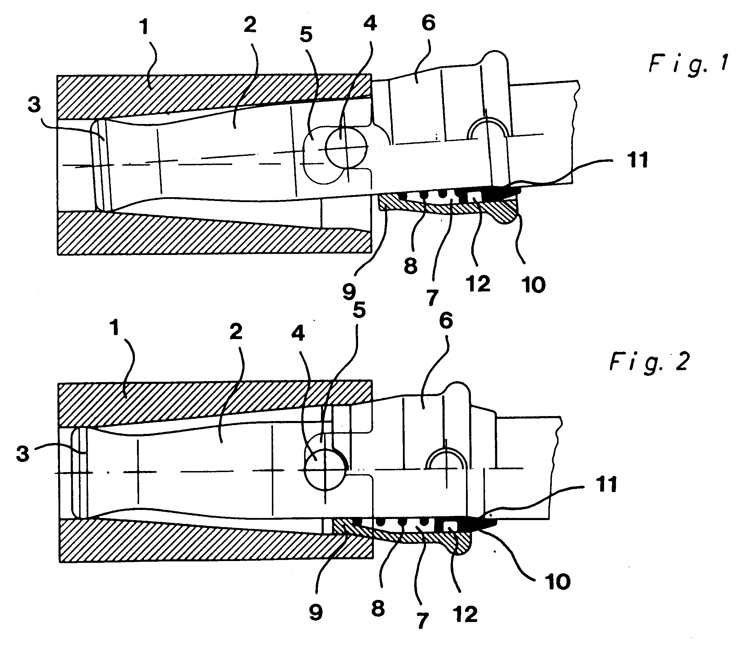

Die Nut 5 geht im Anschluß an die axial ausgerichtete Strecke in eine radial ausgerichtete Strecke über, so daß die somit winkelförmig verlaufende Nut 5 und der Zapfen 4 einen bajonettartigen Verschluß für die in das Gehäuse 1 eingeführte Kugelstange 2 bilden, indem die Kugelstange 2 mit dem Eintritt des Zapfens 4 in die radial ausgerichtete Strecke der Nut in eine koaxiale Stellung zum Gehäuse 1 verschwenk- und verdrehbar ist, wobei der Zapfen 4 schließlich seine Endstellung in der Nut 5 einnimmt, wie dies in Fig. 2 dargestellt ist.

Um die Endstellung des Zapfens 4 in der Nut 5 zu fixieren, ist eine Hülse 6 vorgesehen, die sich auf der Kugelstange 2 verschieben läßt. Mit einem Teilstück der Hülse 6 ist ein öffnungsnaher Ringraum ausfüllbar, der in koaxialer Stellung der Kugelstange 2 zum Gehäuse 1 zwischen dessen Innenseite und der Außenseite der Kugelstange 2 entsteht.

In einer Ausdrehung 7 im Innern der Hülse 6 ist eine Druckfeder 8 plaziert, die sich mit einem Ende gegen einen radial nach innen gerichteten Flansch 9 aus dem Material der Hülse 6 und mit einem Ende gegen einen in die Hülse 6 eingeschobenen Ring 10 abstützt, der seinerseits durch die Druckfeder 8 gegen eine Schulter 11 der Kugelstange 2 abgestützt ist. Auf diese Weise wird die Hülse 6 einerseits durch die Wirkung der Druckfeder 8 in den Ringraum hineingepreßt und kann andererseits gegen die Spannkraft der Druckfeder 8 aus den Ringraum herausgezogen werden, um die Kugelstange 2 vom Gehäuse 1 zu entkuppeln.

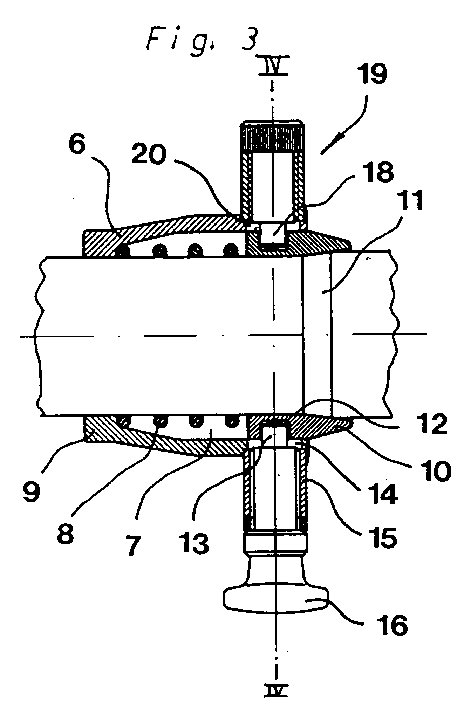

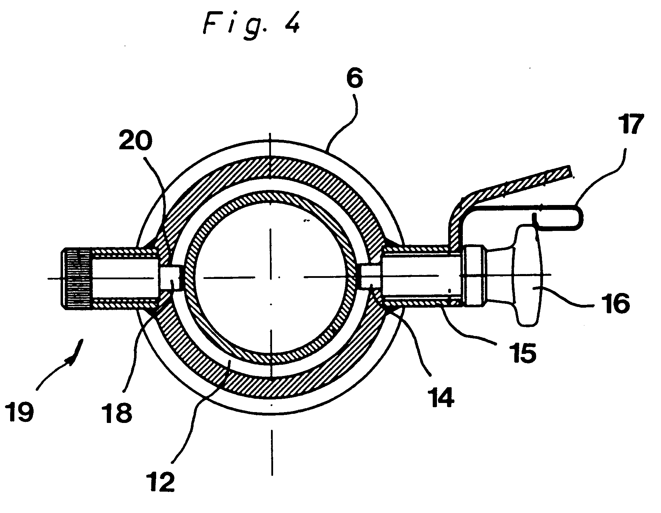

Um ein unbeabsichtigtes Heraustreten der Hülse 6 aus dem Ringraum mit hinreichender Sicherheit auszuschließen, ist - wie die Fig. 3 und 4 zeigen - im Ring 10 der Hülse 6 eine Vertiefung 12 in Form einer Ringnut vorgesehen. In diese greift ein Fixierstift 13 ein, der durch eine radiale Bohrung 14 in der Hülse 6 hindurchgeführt und in einer an die Bohrung 14 angeschlossenen Buchse 15 axial verschiebbar ist. Eine nicht dargestellte, in den Fixierstift 13 integrierte Druckfeder hält den Fixierstift 13 im Eingriff mit der Vertiefung 12. Der Fixierstift 13 ist an seinem freien Ende mit einem Betätigungskopf 14 versehen, mit dem der Fixierstift 13 gegen die Federwirkung aus der Vertiefung 12 herausgezogen werden kann. Zur zusätzlichen Sicherung des Fixierstiftes 13 ist der Betätigungsknopf 16 von einer an der Buchse 15 befestigten Blattfeder 17 überlagert.

Auf der dem Fixierstift gegenüberliegenden Seite greift in die aus der Ringnut gebildete Vertiefung 12 ein Riegel 18 eines konventionell ausgebildeten Sperrschlosses 19 ein, das an die Hülse 6 so angeschweißt ist, daß der Riegel 18 zur Überführung in die Verriegelungsposition über eine Bohrung 20 in der Hülse 6 in die Vertiefung 12 gelangt.

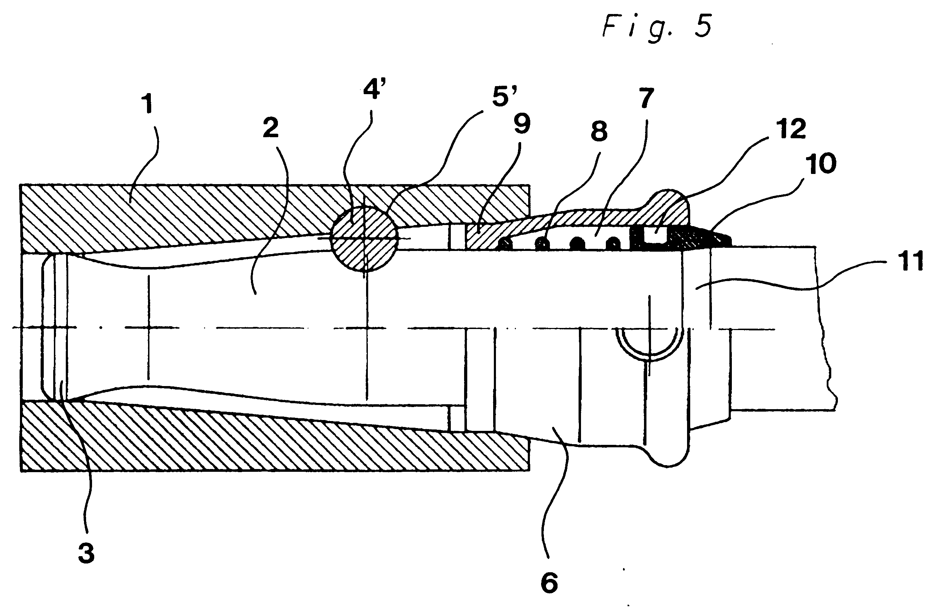

Bei der in Fig. 5 dargestellten abgewandelten Ausführungsform besteht das Verriegelungselement aus einem in die Kugelstange 2 seitlich eingelassenen, mit einem wesentlichen Teil seines Querschnittes über den Außenumfang der Kugelstange 2 vorstehenden Querbolzen 4', der in der Verriegelungsposition in eine im Gehäuse 1 vorgesehen Rille 5' eingreift. Diese ist zur Längsachse des Gehäuses 1 quer ausgerichtet und im Querschnitt halbkreisförmig ausgebildet, wodurch sich eine kraft- und teilweise formschlüssige Verbindung zwischen dem Gehäuse 1 und der Kugelstange 2 gewährleisten läßt, sobald die Hülse 6 ihre Verriegelungsposition eingenommen hat.

## Patentansprüche

1. Anhängekupplung mit einem an einem Querträger angeschlossenen Gehäuse und einer darin durch eine konzentrische Öffnung einsteckbaren, in einer koaxialen Position zum Gehäuse verriegelbaren Kugelstange, dadurch gekennzeichnet, daß die Öffnung und der Innenraum des Gehäuses (1) größere Querschnitte aufweisen als die entsprechenden Querschnitte der Kugelstange (2) und daß über die Innenseite des Gehäuses (1) und/oder über die Außenseite der Kugelstange (2) ein radial vorstehendes Verriegelungselement angeordnet ist, durch das die Kugelstange (2) in das und aus dem Gehäuse (1) nur ein- bzw. ausführbar ist, wenn die Mittelachse der Kugelstange (2) und die Mittelachse des Gehäuses (1) sich schneiden, und daß die in das Gehäuse (1) eingeführte Kugelstange (2) koaxial zum Gehäuse (1) ausrichtbar ist, wobei das Verriegelungselement in eine Aussparung auf der Außenseite der Kugelstange (2) bzw. auf der Innenseite des Gehäuses (1) überführbar ist, und daß ein durch die koaxiale Ausrichtung der Kugelstange (2) zum Gehäuse (1) darin erzeugbarer freier Ringraum in einem sich an die Öffnung anschließenden Gehäusebereich durch eine auf der Kugelstange (2) verschiebbar gelagerte Hülse (6) ausfüllbar ist.

2. Anhängekupplung nach Anspruch 1, dadurch gekennzeichnet, daß der Durchmesser der Kugelstange (2) am in das Gehäuse (1) eingeführten Ende (3) dem entsprechenden Innendurchmesser des Gehäuses (1) entspricht, wobei das Ende (3) der Kugelstange (2) mit einem im Querschnitt kreisförmig abgerundeten Hals versehen ist.

3. Anhängekupplung nach Anspruch 1 oder 2, dadurch gekennzeichnet, daß das Verriegelungselement aus einem in das Gehäuse (1) oder in die Kugelstange (2) radial eingesetzten Zapfen (4) und die Aussparung aus einer in die Kugelstange (2) bzw. in das Gehäuse (1) eingeformten, winkelförmig verlaufenden Nut (5) besteht, in die der Zapfen (4) bajonettverschlußartig einführbar ist.

4. Anhängekupplung nach Anspruch 1 oder 2, dadurch gekennzeichnet, daß das Verriegelungselement aus einem in das Gehäuse (1) oder in die Kugelstange (2) eingelassenen Querbolzen (4') und die Aussparung aus einer in die Kugelstange (2) bzw. in das Gehäuse (1) eingeformten, querverlaufenden Rille (5') besteht, in die der Querbolzen (4') einführbar ist.

5. Anhängekupplung nach einem der Ansprüche 1 bis 4, dadurch gekennzeichnet, daß die Hülse (6) durch eine darin integrierte Druckfeder (8) in den Ringraum hinein- und gegen die Spannkraft der Druckfeder (8) aus dem Ringraum herauspreßbar ist.

6. Anhängekupplung nach einem der Ansprüche 1 bis 5, dadurch gekennzeichnet, daß die Hülse (6) mit einer radialen Bohrung (14) versehen ist, durch die ein federbelasteter Fixierstift (13) hindurchführbar ist, der in der Verriegelungsposition der Hülse (6) in eine der Kugelstange (2) zugeordnete Vertiefung (12) einrastet.

7. Anhängekupplung nach Anspruch 6, dadurch gekennzeichnet, daß die Vertiefung (12) durch eine Ringnut gebildet ist, in welche auf der dem federbelasteten Fixierstift (13) gegenüberliegenden Seite der Riegel (18) eines Sperrschlosses (19) einführbar ist.

## Claims

1. A trailer coupling having a housing attached to a cross-beam and a ball rod which can be inserted in the housing through a concentric opening and which can be locked in a coaxial position in relation to the housing, characterised in that the opening and the interior space of the housing (1) have larger cross-sections than the corresponding cross-sections of the ball rod (2), and that a locking element is disposed projecting radially above the inside of the housing (1) and/or above the outside of the ball rod (2), through which locking element the ball rod (2) can only be moved into or moved out of the housing (1) when the centre line of the ball rod (2) and the centre line of the housing (1) intersect each other, and that the ball rod (2) can be aligned coaxially with the housing (1) when inserted in the housing (1), wherein the locking element can be moved into a recess on the outside of the ball rod (2) or on the inside of the housing (1), and that a free annular space produced in the housing by the coaxial alignment of the ball rod (2) in relation to the housing (1) can be filled up, in a housing region adjacent to the opening, by a sleeve (6) which is displaceably mounted on the ball rod (2).

2. A trailer coupling according to claim 1, characterised in that the diameter of the ball rod (2) at its end (3) inserted in the housing (1) corresponds to the corresponding inside diameter of the housing (1), wherein the end (3) of the ball rod (2) is provided with a neck which is rounded off circularly in cross-section.

3. A trailer coupling according to claim 1 or 2, characterized in that the locking element consists of a peg (4) which is inserted radially into the housing (1) or into the ball rod (2), and the recess consists of a slot (5) extending angularly and formed in the ball rod (2) or in the housing (1), respectively, into which the peg (4) can be introduced in the manner of a bayonet lock.

4. A trailer coupling according to claim 1 or 2, characterised in that the locking element consists of a transverse pin (4') let into the housing (1) or into the ball rod (2), and the recess consists of a transversely extending channel (5') formed in the ball rod (2) or in the housing (1), respectively, into which the transverse pin (4') can be introduced.

5. A trailer coupling according to any one of claims 1 to 4, characterised in that the sleeve (6) can be pushed into the annular space by a pressure spring (8) integrated in the sleeve and can be pushed out of the annular space against the elastic force of the pressure spring (8).

6. A trailer coupling according to any one of claims 1 to 5, characterised in that the sleeve (6) is provided with a radial hole (14) through which a spring-loaded fixing pin (13) can be passed which latches in an indentation (12) associated with the ball rod (2) when the sleeve (6) is in its locked position.

7. A trailer coupling according to claim 6, characterised in that the indentation (12) is formed by an annular groove into which the bolt (18) of a retaining lock (19) can be introduced on the opposite side to the spring-loaded fixing pin (13).

## Revendications

1. Accouplement de remorque, comprenant une cage d'accouplement fixée sur un support transversal et une barre d'attelage à rotule adaptée pour être introduite dans cette cage à travers une ouverture concentrique et pour être verrouillée dans une position coaxiale à cette cage, caractérisé par le fait que l'ouverture concentrique et le logement interne de la cage (1) ont des sections transversales plus grandes que celles correspondantes de la barre d'attelage à rotule (2) et qu'un élément de verrouillage saillant radialement est situé sur le côté intérieur de la cage (1), et/ou sur le côté extérieur de la barre à rotule (2), cet élément étant adapté pour permettre l'introduction dans la cage (1), ou l'extraction depuis celle-ci, de la barre à rotule (2) seulement quand l'axe central de cette dernière et celui de la cage (1) se croisent, et par le fait que la barre à rotule (2), lors de son introduction dans la cage (1) peut être alignée de manière coaxiale à cette dernière cage (1), l'élément de verrouillage étant adapté pour passer à travers un évidement situé sur le côté extérieur de la barre à rotule (2) ainsi que sur le côté intérieur correspondant de la cage (1), et par le fait qu'un espace annulaire libre est formé dans la cage (1) lors de la mise en alignement coaxial de la barre à rotule (2) par rapport à cette cage (1) et se trouve occupé dans une zone de cette dernière, adjacente à l'ouverture concentrique, par un manchon (6) monté de manière coulissante sur la barre à rotule (2).

2. Accouplement de remorque selon la revendication 1, caractérisé par le fait que le diamètre de la barre à rotule (2) coïncide avec le diamètre intérieur correspondant de la cage d'accouplement (1) au niveau de l'extrémité (3) de cette barre (2) introduite dans la cage (1), cette extrémité (3) étant pourvue d'un collet de forme arrondie vue en coupe.

3. Accouplement de remorque selon l'une ou l'autre des revendications 1 ou 2, caractérisé par le fait que l'élément de verrouillage est constitué par un téton (4) introduit de manière radiale dans la cage d'accouplement (1) ou dans la barre à rotule (2) et que l'évidement est constitué par une mortaise (5) conçue de manière à former un recoin, située respectivement dans la barre à rotule (2) et dans la cage (1), et dans laquelle le téton (4) peut être introduit de manière semblable à celle d'une fermeture à baïonnette.

4. Accouplement de remorque selon l'une ou l'autre des revendications 1 ou 2, caractérisé par le fait que l'élément de verrouillage est constitué par un goujon transversal (4') engagé dans la cage (1) ou dans la barre à rotule (2), l'évidement étant constitué par une rainure (5') s'étendant de manière transversale, située respectivement dans la barre à rotule (2) et dans la cage (1), et dans laquelle le goujon transversal (4') peut être introduit.

5. Accouplement de remorque selon l'une quelconque des revendications 1 à 4, caractérisé par le fait que le manchon (6) peut être introduit par pression dans l'espace annulaire au moyen d'un ressort de pression (8) logé dans ce manchon et qu'il peut être extrait de cet espace annulaire par pression dans le sens opposé à la force élastique du ressort de pression (8).

6. Accouplement de remorque selon l'une quelconque des revendications 1 à 5, caractérisé par le fait que le manchon (6) est pourvu d'un perçage radial (14) à travers lequel on peut introduire une cheville de fixation (13) contrainte par un ressort et qui, dans la position de verrouillage du manchon (6), s'encliquette dans une cavité (12) située dans la barre à rotule (2).

7. Accouplement de remorque selon la revendication 6, caractérisé par le fait que la cavité (12) est constituée par une gorge annulaire dans laquelle le pêne (18) d'un dispositif de blocage (19) peut être introduit, sur le côté opposé à la cheville de fixation (13) contrainte par un ressort.
